# EUROPEAN PATENT APPLICATION

(11) **EP 4 718 557 A1**
(43) Date of publication of application: **01.04.2026**
(21) Application number: 23939147.7
(22) Date of filing: 16.08.2023
(51) Int. Cl.: H01M 10/0525, H01M 10/0567, H01M 4/36

(54) **LITHIUM SECONDARY BATTERY AND ELECTRICAL DEVICE**

(30) Priority: 29.05.2023 CN 202310613348
(71) Applicant: Contemporary Amperex Technology Co., Limited, Ningde, Fujian 352100 (CN)
(72) Inventor: WU, Kai, Ningde, Fujian 352100 (CN); ZHANG, Cuiping, Ningde, Fujian 352100 (CN); HAN, Changlong, Ningde, Fujian 352100 (CN)
(74) Representative: Ziebig Hengelhaupt Intellectual Property Attorneys Patentanwaltskanzlei PartGmbB
(86) International application number: PCT/CN2023/113262
(87) International publication number: WO 2024/244170

(57) **Abstract**

The present application discloses a lithium secondary battery and an electrical apparatus. The lithium secondary battery includes a positive electrode plate and an electrolyte solution, where the positive electrode plate includes a positive electrode active material layer containing a positive electrode active material, and the positive electrode active material includes at least one doping element selected from aluminum, zirconium, boron, magnesium, zinc, calcium and titanium; the electrolyte solution includes a silane-based first additive containing C2-C8 alkenyl and a second additive, and the second additive is selected from at least one of lithium fluorosulfonate, lithium bis(fluorosulfonyl)imide and lithium tetrafluoroborate; and the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5). The lithium secondary battery of the present application has good cycling performance, kinetic performance and storage life.

## Description

### CROSS-REFERENCE TO RELATED APPLICATIONS

The present application claims priority to Chinese patent application 202310613348.7 filed on May 29, 2023 and entitled "LITHIUM SECONDARY BATTERY AND ELECTRICAL APPARATUS", which is incorporated herein by reference in its entirety.

### TECHNICAL FIELD

The present application belongs to the technical field of energy storage apparatuses, and particularly relates to a lithium secondary battery and an electrical apparatus.

### BACKGROUND

A lithium secondary battery takes lithium ions as active ions, has the advantages of high energy density and high operating voltage, and is widely applied to various electronic products and electric apparatuses. With the increasing emphasis on environmental protection, new-energy vehicles are increasingly popularized, and the demand for lithium secondary batteries will show an explosive growth.

With the increasingly extensive application of lithium secondary batteries, users put forward higher performance requirements for lithium secondary batteries. How to improve the cycling performance, kinetic performance and storage life of lithium secondary batteries is the focus of the current research.

### SUMMARY OF THE INVENTION

The purpose of the present application is to provide a lithium secondary battery. The lithium secondary battery has good cycling performance, kinetic performance and storage life while maintaining high energy density. The present application further provides an electrical apparatus including the above lithium secondary battery.

According to a first aspect, an embodiment of the present application provides a lithium secondary battery, including a positive electrode plate and an electrolyte solution, where the positive electrode plate includes a positive electrode active material layer containing a positive electrode active material, and the positive electrode active material includes at least one doping element selected from aluminum, zirconium, boron, magnesium, zinc, calcium and titanium;
the electrolyte solution includes a silane-based first additive containing C2-C8 alkenyl and a second additive, and the second additive is selected from at least one of lithium fluorosulfonate, lithium bis(fluorosulfonyl)imide and lithium tetrafluoroborate; and
the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5).

According to the technical solution of the embodiment of the present application, the positive electrode active material includes at least one doping element selected from aluminum, zirconium, boron, magnesium, zinc, calcium and titanium, which can make the positive electrode active material have high energy density while maintaining better structural stability during charging and discharging, thereby improving the cycling performance and kinetic performance of the lithium secondary battery.

In the lithium secondary battery according to the embodiment of the present application, the electrolyte solution contains a certain amount of C2-C8 alkenyl silane-based first additive. When the lithium secondary battery is formed, such a first additive participates in the membrane formation reaction of an SEI membrane (Solid Electrolyte Interface Membrane) on one side of a negative electrode plate and can enhance the strength and toughness of the obtained SEI membrane to avoid repeated destruction and formation of the SEI membrane, and can effectively reduce or avoid, for example, side reactions between the electrolyte solution and a negative electrode active material, thereby improving the cycling performance and kinetic performance of the lithium secondary battery.

The electrolyte solution further contains a certain amount of second additive. Such a second additive can participate in and promote the formation of a CEI membrane on one side of a positive electrode plate to inhibit the dissolution of doping elements in a positive electrode active material, thereby improving the structural stability of the positive electrode active material. In addition, by promoting the formation of the CEI membrane, the second additive can effectively inhibit the redox reaction of the first additive on one side of the positive electrode plate, thereby avoiding or reducing the gas production effect of such redox reaction, which is conducive to prolonging the storage life of the lithium secondary battery.

When the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5), the first additive and the second additive can cooperate with each other to form an SEI membrane and a CEI membrane with good stability and toughness, thereby inhibiting the dissolution of doping elements in the positive electrode active material and the gas production side reaction of the first additive, effectively improving the cycling performance and kinetic performance of the lithium secondary battery, and also prolonging the storage life of the lithium secondary battery.

In any embodiment of the present application, the ratio of W1 to W2 to W3 may further satisfy 1:(0.5-1.5):(0.2-0.4), and optionally satisfy 1:(0.8-1.2):(0.2-0.4). The ratio of W1 to W2 to W3 is within the above range, which can further enhance the synergistic effect between the first additive and the second additive, thereby further improving the cycling performance, kinetic performance and storage life of the lithium secondary battery.

In any embodiment of the present application, the mass percentage content W1 of the first additive in the electrolyte solution is 0.05% to 1%, and optionally 0.1% to 1%. When the mass percentage content W1 of the first additive in the electrolyte solution is within the above range, the first additive can effectively participate in the membrane formation reaction of the SEI membrane on one side of the negative electrode plate during the formation of the lithium secondary battery to significantly improve the composition of the SEI membrane, so that the formed SEI membrane has improved strength and toughness.

In any embodiment of the present application, the first additive includes at least one of tetravinylsilane, ethyltrivinylsilane, diethyldivinylsilane, triethylvinylsilane, and trivinylalkynylsilane. The first additive of the above type is a type of silane compound containing C2-C8 alkenyl. The C2-C8 alkenyl can undergo an addition polymerization reaction on one side of the negative electrode plate during formation to obtain a product with a higher molecular weight, thereby participating in the formation of the SEI membrane. When C2-C8 alkenyl silane compounds participate in the formation of the SEI membrane, carbon chain compounds with larger molecular weights and silicon atoms with stable chemical properties can be introduced for the SEI membrane, thereby enhancing the strength, toughness and stability of the SEI membrane.

In any embodiment of the present application, the mass percentage content W2 of the second additive in the electrolyte solution is 0.01% to 2%, and optionally 0.02% to 2%. The mass percentage content W2 of the second additive in the electrolyte solution is within the above range, so that on the one hand, the second additive can cooperate with the first additive to form an SEI membrane with good performance; and on the other hand, the second additive can effectively promote the formation of the CEI membrane on one side of the positive electrode plate, and the formed CEI membrane can inhibit the dissolution of doping elements in the positive electrode active material, and inhibit the decomposition and gas production reaction of the first additive on the positive electrode plate side.

In any embodiment of the present application, the electrolyte solution includes an organic solvent, and the organic solvent includes one or more of ethylene carbonate, propylene carbonate, fluorbenzene, dimethyl carbonate, diethyl carbonate, ethyl methyl carbonate, ethyl acetate, propyl acetate and methyl formate. When the organic solvent in the electrolyte solution is of the above type, the organic solvent can be matched to have a suitable viscosity, and the first additive and the second additive can be effectively dispersed therein, which is beneficial to the storage performance of the electrolyte solution in the lithium secondary battery.

In any embodiment of the present application, the mass percentage content W3 of the doping element in the positive electrode active material is 0.005% to 0.5%, and optionally, 0.005% to 0.45%. By controlling the mass percentage content W3 of the doping element in the positive electrode active material within the above range, the Li/Ni mixing and H2-H3 phase transition phenomena in the positive electrode active material can be effectively reduced or avoided during charging and discharging of the lithium secondary battery, thereby prolonging the cycle life and storage life of the lithium secondary battery.

In any embodiment of the present application, the positive electrode active material includes one or more of lithium transition metal oxides with a structural formula of LiₐNi_{b}Co_{c}Mn_{f}M_{d}Oₑ, or modified compounds thereof. 0.8≤a≤1.2, 0.5≤b<1, 0<c<1, 0<d<1, 1≤e≤2, 0≤f≤1, and M includes one or more selected from Mn, Al, Zr, Zn, Cu, Cr, Mg, Fe, V, Ti and B.

In any embodiment of the present application, the ratio of b to (b+c+f) is (0.8-0.98):1, and optionally (0.82-0.96):1. It can be understood that the ratio of the molar weight of nickel element to the sum of the molar weights of nickel element, cobalt element and manganese element is within the above range, which can make the positive electrode material have good cycling performance, high specific capacity, high safety and low cost, and can also improve the specific capacity of the positive electrode active material.

In any embodiment of the present application, the ratio of c to (b+c+f) is (0.01-0.2):1, and optionally (0.015-0.15):1. It can be understood that the ratio of the molar weight of cobalt element to the sum of the molar weights of nickel element, cobalt element and manganese element is within the above range, which can make the positive electrode material have good cycling performance, high specific capacity, high safety and low cost, and can also improve the cycling performance of the positive electrode active material.

In any embodiment of the present application, the ratio of f to (b+c+f) is (0.1-0.2):1, and optionally (0.15-0.2):1, where (b+c+f) represents the sum of b, c and f. The ratio of the molar weight of manganese element to the sum of the molar weights of nickel element, cobalt element and manganese element is within the above range, which can make the positive electrode material have good cycling performance, high specific capacity, high safety and low cost, and can also improve the cycling performance of the positive electrode active material. In any embodiment of the present application, the surface density of the positive electrode active material layer is 3.0 g/cm³ or higher. The surface density of the positive electrode active material layer is within the above range. According to the routine, the content of the positive electrode active material in the positive electrode active material layer is generally 92% to 98.5%, indicating that there are more positive electrode active materials therein, which can improve the cycling performance of the lithium secondary battery.

In any embodiment of the present application, the negative electrode active material layer further includes silicon element. As a negative electrode active material, the silicon element has the advantages of high capacity (4200 mA·h/g) and low lithium desorption voltage. Adding the silicon element to the negative electrode active material layer helps to improve the storage performance of the negative electrode plate for active lithium and reduce the lithium desorption voltage of the negative electrode.

In any embodiment of the present application, the negative electrode active material layer contains less than or equal to 8% of silicon element based on the total mass of the negative electrode active material layer. The mass content of the silicon element in the negative electrode active material layer is within the above range, which is conducive to controlling the volume expansion rate of the negative electrode active material layer and improving the performance of the lithium secondary battery on the basis of increasing the capacity of the negative electrode plate and reducing the lithium desorption voltage.

In any embodiment of the present application, the compacted density of the negative electrode active material layer is 1.3-1.7 g/cm3. The compacted density of the negative electrode active material layer is within the above range, which is conducive to controlling the risk of current collector extension caused by the volume change of an active material during charging and discharging of the lithium secondary battery, and the risk of breakage of the positive electrode plate caused by extension of the negative electrode plate, thereby improving the problems of wrinkling of the negative electrode plate and battery deformation.

According to a second aspect, an embodiment of the present application provides an electrical apparatus, including the lithium secondary battery according to the first aspect.

The electrical apparatus in the present application includes the lithium secondary battery provided in the present application, and thus has at least the same advantages as the lithium secondary battery.

### DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to these drawings without any creative effort.
FIG. 1 is a schematic diagram of an embodiment of a lithium secondary battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a lithium secondary battery as a power source.

### DETAILED DESCRIPTION

In order to make the objectives, technical solutions and beneficial technical effects of the present application clearer, the present application will be described in detail below with reference to specific embodiments. It should be understood that the embodiments described in the specification are only for explaining rather than limiting the present application.

For the sake of brevity, the present application specifically discloses some numerical ranges. However, any lower limit can be combined with any upper limit to form a range not explicitly recited; and any lower limit can be combined with another lower limit to form a range not explicitly recited, and likewise, any upper limit can be combined with any another upper limit to form a range not explicitly recited. Furthermore, every point or single numerical value between the endpoints of a range is included within the range, even if not expressly recited. Thus, each point or single numerical value may serve as its own lower or upper limit to form an unspecified range in combination with any other point or single numerical value or with other lower or upper limits.

In the description herein, it should be noted that, unless otherwise specified, "or more" and "or less" encompass the recited number itself, and "more" in "one or more" means two or more.

The above content of the present application is not intended to describe each disclosed embodiment or each implementation of the present application. The following description illustrates exemplary embodiments in more detail. In various places throughout the present application, guidance is provided through a series of embodiments, and these embodiments can be used in various combinations. In each example, the enumeration is performed to give only representative groups and should not be interpreted as exhaustive.

Lithium secondary batteries have attracted much attention due to their characteristics of high energy, long cycle life and good safety performance. Currently, lithium-ion battery applications have penetrated into all aspects of daily life, such as cameras, laptops and electric vehicles.

A lithium secondary battery includes an electrode assembly and an electrolyte solution. The electrode assembly includes a positive electrode plate, a negative electrode plate, and a separator arranged between the positive electrode plate and the negative electrode plate. Improving the cycling performance and energy density of the lithium secondary battery has always been the pursuit of the industry.

In order to increase the energy density of a battery cell, the nickel content in the positive electrode plate is generally higher. However, with the increase of the nickel content, during charging and discharging of the lithium secondary battery, the Li/Ni mixing and H2-H3 phase transition in the positive electrode active material are relatively serious, so that the cycle life and storage life of the battery are affected.

The research has found that the valence state of transition metal ions in nickel-cobalt-manganese ternary materials changes, causing the cycling performance of the lithium secondary battery to decrease. Therefore, doping some specific elements into the positive electrode active material can change the energy band structure of the positive electrode active material to solve the above problems. However, doping elements in the positive electrode active material will be gradually released during long-term charging and discharging and deposited on the negative electrode. The release of doping elements will reduce the cycling performance of the positive electrode active material during charging and discharging, and the deposition of doping elements will damage the SEI membrane on the surface of the negative electrode, thus affecting the cycle stability of the lithium secondary battery.

During charging and discharging of the lithium secondary battery, the electrolyte solution often undergoes side reactions at the interface between the positive electrode plate and the negative electrode plate, so that the comprehensive performance of the lithium secondary battery is affected.

The research has found that the deposition of doping elements in the negative electrode can be inhibited by adding additives including tetravinylsilane. Such additives are easily oxidized in the positive electrode plate to produce gas, which is not conducive to the performance of the lithium secondary battery.

In view of this, the technical solution of the embodiment of the present application provides a lithium secondary battery, which can at least reduce the deposition of doping elements on the negative electrode plate during charging and discharging of the battery so as to reduce or avoid the adverse effects of doping elements on the cycling performance of the battery, and reduce the oxidation of additives that inhibit the release of doping elements on the positive electrode plate, so that the additives participate in the formation of the CEI membrane on one side of the positive electrode plate so as to protect the positive electrode active material, thereby improving the comprehensive performance of the lithium secondary battery containing the same, such as cycle life and storage life.

### Lithium secondary battery

According to a first aspect, an embodiment of the present application provides a lithium secondary battery, including a positive electrode plate and an electrolyte solution, where the positive electrode plate includes a positive electrode active material layer containing a positive electrode active material, and the positive electrode active material includes at least one doping element selected from aluminum, zirconium, boron, magnesium, zinc, calcium and titanium;
the electrolyte solution includes a silane-based first additive containing C2-C8 alkenyl and a second additive, and the second additive is selected from at least one of lithium fluorosulfonate, lithium bis(fluorosulfonyl)imide and lithium tetrafluoroborate; and
the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5).

According to the technical solution of the embodiment of the present application, the positive electrode active material includes at least one doping element selected from aluminum, zirconium, boron, magnesium, zinc, calcium and titanium, which can make the positive electrode active material have high energy density while maintaining better structural stability during charging and discharging, thereby improving the cycling performance and kinetic performance of the lithium secondary battery.

In the lithium secondary battery according to the embodiment of the present application, the electrolyte solution contains a certain amount of C2-C8 alkenyl silane-based first additive. When the lithium secondary battery is formed, such a first additive and a second additive together participate in the membrane formation reaction of an SEI membrane (Solid Electrolyte Interface Membrane) on one side of a negative electrode plate and can enhance the strength and toughness of the obtained SEI membrane to avoid repeated destruction and formation of the SEI membrane, and can effectively reduce or avoid, for example, side reactions between the electrolyte solution and a negative electrode active material, thereby improving the cycling performance and kinetic performance of the lithium secondary battery.

The electrolyte solution further contains a certain amount of second additive. Such a second additive can participate in and promote the formation of a CEI membrane on one side of a positive electrode plate to inhibit the dissolution of doping elements in a positive electrode active material, thereby improving the structural stability of the positive electrode active material. In addition, by promoting the formation of the CEI membrane, the second additive can effectively inhibit the redox reaction of the first additive on one side of the positive electrode plate, thereby avoiding or reducing the gas production effect of such redox reaction, which is conducive to prolonging the storage life of the lithium secondary battery.

When the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5), and optionally, the ratio of W1 to W2 to W3 is any one of 1:0.3:0.1, 1:1:0.3:0.1, 1:0.4:0.1, 1:1.6:0.5, 1:1.7:0.5, 1:1.8:0.5, 1:1.9:0.5, 1:2.0:0.5, or a range of combination thereof,
the first additive and the second additive can cooperate with each other to form an SEI membrane and a CEI membrane with good stability and toughness, thereby inhibiting the dissolution of doping elements in the positive electrode active material and the gas production side reaction of the first additive, effectively improving the cycling performance and kinetic performance of the lithium secondary battery, and also prolonging the storage life of the lithium secondary battery.

In some optional embodiments, the ratio of W1 to W2 to W3 satisfies 1:(0.5-1.5):(0.2-0.4), and optionally satisfies 1:(0.8-1.2):(0.2-0.4). The ratio of W1 to W2 to W3 may be any one of
1:0.5:0.2, 1:0.6:0.2, 1:0.7:0.2, 1:0.85:0.2, 1:0.9:0.2, 1:1.0:0.2, 1:1.1:0.2, 1:1.2:0.2, 1:1.3:0.2, 1:0.4:0.2, 1:0.5:0.3, 1:0.6:0.3, 1:0.7:0.3, 1:0.85:0.3, 1:0.9:0.3, 1:1.0.3, 1:1.1:0.3, 1:1.2:0.3, 1:1.3:0.3, 1:0.4:0.3, 1:0.5:0.4, 1:0.6:0.4, 1:0.7:0.4, 1:0.85:0.4, 1:0.9:0.4, 1:1.0:0.4, 1:1.1:0.4, 1:1.2:0.4, 1:1.3:0.4, and 1:0.4:0.4, or a range of combination thereof. The ratio of W1 to W2 to W3 is within the above range, which can further enhance the synergistic effect between the first additive and the second additive, thereby further improving the cycling performance, kinetic performance and storage life of the lithium secondary battery.

### [Electrolyte solution]

The electrolyte solution plays a role in conducting ions between the positive electrode plate and the negative electrode plate. The type of the electrolyte solution is not specifically limited in the present application, and may be selected according to requirements.

In some optional embodiments, the electrolyte solution includes electrolyte salt. In some optional embodiments, the electrolyte salt may be selected from one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), LiPO₂F₂ (lithium difluorophosphate), LiDFOP (lithium difluoro bis(oxalato)phosphate) and LiTFOP (lithium tetrafluoro(oxalato)phosphate).

In some optional embodiments, the electrolyte solution includes an organic solvent, and the organic solvent includes one or more of ethylene carbonate, propylene carbonate, fluorbenzene, dimethyl carbonate, diethyl carbonate, ethyl methyl carbonate, ethyl acetate, propyl acetate and methyl formate. When the organic solvent in the electrolyte solution is of the above type, the organic solvent can be matched to have a suitable viscosity, and the first additive and the second additive can be effectively dispersed therein, which is beneficial to the storage performance of the electrolyte solution in the lithium secondary battery.

In some optional embodiments, the viscosity of the electrolyte solution at 25°C is 2.0 mPas to 5.0 mPas. The electrolyte solution within the above viscosity range is beneficial to the transmission of active ions and is beneficial to the kinetic performance of the lithium secondary battery.

In some optional embodiments, the electrolyte solution further optionally includes an additive. For example, the additive may include a negative electrode membrane formation additive, a positive electrode membrane formation additive, or an additive capable of improving certain performance of the battery, such as an additive capable of improving overcharging performance of the battery, an additive capable of improving high temperature performance of the battery, or an additive capable of improving low temperature performance of the battery.

In some optional embodiments, additives include a first additive and a second additive.

In some optional embodiments, the mass percentage content W1 of the first additive in the electrolyte solution is 0.05% to 1%. Optionally, W2 is 0.01% to 2%, and optionally 0.05% to 1%. The mass percentage content W1 of the first additive in the electrolyte solution is any value of 0.05%, 0.1%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95% and 1.0%, or a range consisting of any values. When the mass percentage content W1 of the first additive in the electrolyte solution is within the above range, the first additive can effectively participate in the membrane formation reaction of the SEI membrane on one side of the negative electrode plate during the formation of the lithium secondary battery to significantly improve the composition of the SEI membrane, so that the formed SEI membrane has improved strength and toughness.

When the content of the first additive is less than 0.05%, the effect of significantly improving the SEI membrane cannot be achieved. When the content of the first additive is greater than 1%, the formed SEI membrane may be too thick and the strength of the SEI membrane may decrease, which may adversely affect the cycling performance and kinetic performance of the lithium secondary battery.

In some optional embodiments, the first additive includes at least one of tetravinylsilane, ethyltrivinylsilane, diethyldivinylsilane, triethylvinylsilane, and trivinylalkynylsilane. The first additive of the above type is a type of silane compound containing C2-C8 alkenyl. The C2-C8 alkenyl can undergo an addition polymerization reaction on one side of the negative electrode plate during formation to obtain a product with a higher molecular weight, thereby participating in the formation of the SEI membrane. When C2-C8 alkenyl silane compounds participate in the formation of the SEI membrane, carbon chain compounds with larger molecular weights and silicon atoms with stable chemical properties can be introduced for the SEI membrane, thereby enhancing the strength, toughness and stability of the SEI membrane.

In some optional embodiments, the mass percentage content W2 of the second additive in the electrolyte solution is 0.01% to 2%, and optionally (0.02%) to (2%). The mass percentage content W1 of the second additive in the electrolyte solution is any value of 0.01%, 0.05%, 0.1%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.0%, 1.01%, 1.05%, 1.1%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95% and 2%, or a range consisting of any values.

The mass percentage content W2 of the second additive in the electrolyte solution is within the above range, so that on the one hand, the second additive can cooperate with the first additive to form an SEI membrane with good performance; and on the other hand, the second additive can effectively promote the formation of the CEI membrane on one side of the positive electrode plate, and the formed CEI membrane can inhibit the dissolution of doping elements in the positive electrode active material, and inhibit the decomposition and gas production reaction of the first additive on the positive electrode plate side.

When the content of the second additive is less than 0.01%, it is not conducive to the formation of the CEI membrane and the SEI membrane. When the content of the second additive is greater than 2%, it may affect the solvation of lithium ions in the electrolyte solution, reduce the ionic conductivity of the electrolyte solution, and affect the kinetic performance of the lithium secondary battery.

### [Positive electrode plate]

In some optional embodiments, the positive electrode plate includes a positive electrode current collector, and a positive electrode active material layer arranged on at least one surface of the positive electrode current collector and including a positive electrode active material. For example, the positive electrode current collector has two surfaces opposite in its own thickness direction, and the positive electrode active material layer is arranged on either or both of the two opposite surfaces of the positive electrode current collector.

The positive electrode active material layer includes a positive electrode active material, and the positive electrode active material may be a positive electrode active material for a battery cell well known in the art.

In some optional embodiments, the positive electrode active material includes a positive electrode active material doped with doping elements.

In some optional embodiments, the mass percentage content W3 of the doping element in the positive electrode active material is 0.005% to 0.5%, and optionally, 0.005% to 0.45%. The mass percentage content W3 of the doping element in the positive electrode active material is any value of 0.005%, 0.01%, 0.015%, 0.020%, 0.025%, 0.030%, 0.035%, 0.040%, 0.045%, 0.050%, 0.055%, 0.060%, 0.065%, 0.070%, 0.075%, 0.080%, 0.085%, 0.090%, 0.095%, 0.1%, 0.15%, 0.20%, 0.25%, 0.30%, 0.35%, 0.40%, 0.45% and 0.50%,

or a range consisting of any values. By controlling the mass percentage content W3 of the doping element in the positive electrode active material within the above range, the Li/Ni mixing and H2-H3 phase transition phenomena in the positive electrode active material can be effectively reduced or avoided during charging and discharging of the lithium secondary battery, thereby prolonging the cycle life and storage life of the lithium secondary battery. In some optional embodiments, the positive electrode active material includes one or more of lithium transition metal oxides with a structural formula of LiₐNi_{b}Co_{c}Mn_{f}M_{d}Oₑ, or modified compounds thereof. 0.8≤a≤1.2, 0.5≤b<1, 0<c<1, 0<d<1, 1≤e≤2, 0≤f≤1, and M includes one or more selected from Mn, Al, Zr, Zn, Cu, Cr, Mg, Fe, V, Ti and B.

In some optional embodiments, the positive electrode active material may be a layered transition metal oxide. In some optional embodiments, the positive electrode active material may be a doped ternary positive electrode nickel-cobalt-manganese material. When the positive electrode active material is of the above type, using the positive electrode active material doped with doping elements can effectively improve the energy band structure of the positive electrode active material, thereby improving the cycle stability of the lithium secondary battery including the positive electrode active material. As an example, the positive electrode active material may include one or more of LiCoO₂, LiNiO₂, LiMnO₂, LiMn₂O₄, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, LiFePO₄ and LiMnPO₄.

The modified compound of each of the above positive electrode active materials may be obtained by performing doping modification and/or surface coating modification on the positive electrode active material.

In some optional embodiments, the mass percentage content W3 of the doping element in the positive electrode active material is 0.005% to 0.5%, and optionally, 0.005% to 0.45%. By controlling the mass percentage content W4 of doping elements in the positive electrode active material within the above range, the Li/Ni mixing and H2-H3 phase transition phenomena in the positive electrode active material can be effectively reduced or avoided during charging and discharging of the lithium secondary battery, thereby prolonging the cycle life and storage life of the lithium secondary battery, and improving the power performance of the lithium secondary battery. When the mass percentage content W4 of doping elements in the positive electrode active material is less than 0.005%, the structure of the positive electrode active material cannot be improved, or the improvement effect is relatively small. When the mass percentage content W4 of doping elements in the positive electrode active material is greater than 0.5%, the energy density of the lithium secondary battery may be reduced.

In some optional embodiments, the ratio of b to (b+c+f) is (0.8-0.98):1, and optionally (0.82-0.96):1. The ratio of the molar weight of nickel element to the sum of the molar weights of nickel element, cobalt element and manganese element is within the above range, which can make the positive electrode material have good cycling performance, high specific capacity, high safety and low cost, and can also improve the specific capacity of the positive electrode active material.

In some optional embodiments, the ratio of c to (b+c+f) is (0.01-0.2):1, and optionally (0.015-0.15):1. The ratio of the molar weight of cobalt element to the sum of the molar weights of nickel element, cobalt element and manganese element is within the above range, which can make the positive electrode material have good cycling performance, high specific capacity, high safety and low cost, and can also improve the cycling performance of the positive electrode active material.

In some optional embodiments, the ratio of f to (b+c+f) is (0.1-0.2):1, and optionally (0.15-0.2):1, where (b+c+f) represents the sum of b, c and f. The ratio of the molar weight of manganese element to the sum of the molar weights of nickel element, cobalt element and manganese element is within the above range, which can make the positive electrode material have good cycling performance, high specific capacity, high safety and low cost, and can also improve the cycling performance of the positive electrode active material. In some optional embodiments, the surface density of the positive electrode active material layer is 3.0 g/cm³ or higher. The surface density of the positive electrode active material layer is within the above range. According to the routine, the content of the positive electrode active material in the positive electrode active material layer is generally 92% to 98.5%, indicating that there are more positive electrode active materials therein, which can improve the cycling performance of the lithium secondary battery. The surface density of the positive electrode active material layer has a meaning well-known in the art, and may be measured by using instruments and methods known in the art. For example, a single-sided coated and cold-pressed positive electrode plate is taken (if it is a double-sided coated positive electrode plate, a positive electrode active material layer on one side can be wiped off first) and punched into small discs with an area of S₁, and the small disc is weighed and recorded as M₁. Then, the positive electrode active material layer of the above weighed positive electrode plate is wiped off, and a positive electrode current collector is weighed and recorded as M₀. Surface density of positive electrode active material layer = (weight M₁ of positive electrode plate - weight M₀ of positive electrode current collector)/S₁.

For example, when the battery cell is a lithium-ion battery cell or a lithium metal battery cell, the positive electrode active material may include one or more of a lithium transition metal oxide, a lithium-containing phosphate with an olivine structure, and respective modified compounds thereof. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate with an olivine structure may include one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon, and respective modified compounds thereof. The present application is not limited to these materials, and other conventional known materials that can be used as positive electrode active materials may also be used.

In some optional embodiments, the positive electrode active material layer further optionally includes a positive electrode conductive agent. The type of the positive electrode conductive agent is not particularly limited in the present application. As an example, the positive electrode conductive agent includes one or more of superconducting carbon, conductive graphite, acetylene black, carbon black, Ketjen black, carbon dots, carbon nanotubes, graphene and carbon nanofiber.

In some optional embodiments, the positive electrode active material layer further optionally includes a positive electrode binder. The type of the positive electrode binder is not particularly limited in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some optional embodiments, the positive electrode current collector may be a metal foil or a composite current collector. As an example of the metal foil, an aluminum foil may be used. The composite current collector may include a high molecular material substrate layer and a metal material layer formed on at least one surface of the high molecular material substrate layer. As an example, the metal material may include one or more of aluminum, aluminum alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The positive electrode active material layer is usually formed by coating a positive electrode slurry on the positive electrode current collector, followed by drying and cold pressing. The positive electrode slurry is usually formed by dispersing a positive electrode active material, an optional conductive agent, an optional binder and any other components in a solvent and uniformly stirring the mixture. The solvent may be N-methyl pyrrolidone (NMP), but is not limited thereto.

### [Negative electrode plate]

In some optional embodiments, the lithium secondary battery further includes a negative electrode plate, and the negative electrode plate includes a negative electrode active material layer; and the negative electrode active material layer includes graphite. The negative electrode active material layer of the lithium secondary battery includes a battery that can effectively store active lithium, which is beneficial to the cycling performance of the lithium secondary battery.

The specific composition and structure of the negative electrode plate may be selected according to the type of the battery cell, and are not limited in the embodiments of the present application.

For example, when the battery cell is a lithium-ion battery cell, the negative electrode plate includes a negative electrode current collector and a negative electrode active material layer arranged on at least one surface of the negative electrode current collector and including a negative electrode active material. For example, the negative electrode current collector has two surfaces opposite in its own thickness direction, and the negative electrode active material layer is arranged on either or both of the two opposite surfaces of the negative electrode current collector.

The negative electrode active material is a material that can deintercalate and intercalate active ions (such as lithium ions), and the negative electrode active material may be a material known in the art. As an example, the negative electrode active material includes, but is not limited to, one or more of natural graphite, artificial graphite, soft carbon, hard carbon, a silicon-based material, a tin-based material and lithium titanate. The silicon-based material may include one or more of elemental silicon, silicon oxide, a silicon-carbon composite, a silicon-nitrogen composite and a silicon alloy material. The tin-based material may include one or more of elemental tin, tin oxide and a tin alloy material. The present application is not limited to these materials, and other conventional known materials that can be used as negative electrode active materials may also be used.

In some optional embodiments, the negative electrode active material layer further includes silicon element. As a negative electrode active material, the silicon element has the advantages of high capacity (4200 mA·h/g) and low lithium desorption voltage. Adding the silicon element to the negative electrode active material layer helps to improve the storage performance of the negative electrode plate for active lithium and reduce the lithium desorption voltage of the negative electrode.

In some optional embodiments, the negative electrode active material layer contains less than or equal to 8% of silicon element based on the total mass of the negative electrode active material layer. The mass content of the silicon element in the negative electrode active material layer is within the above range, which is conducive to controlling the volume expansion rate of the negative electrode active material layer and improving the performance of the lithium secondary battery on the basis of increasing the capacity of the negative electrode plate and reducing the lithium desorption voltage. In some optional embodiments, the compacted density of the negative electrode active material layer is 1.3-1.7 g/cm³. The compacted density of the negative electrode active material layer is within the above range, which is conducive to controlling the risk of current collector extension caused by the volume change of an active material during charging and discharging of the lithium secondary battery, and the risk of breakage of the positive electrode plate caused by extension of the negative electrode plate, thereby improving the problems of wrinkling of the negative electrode plate and battery deformation.

In addition, when the negative electrode active material layer contains a certain amount of silicon element, it is particularly important to control the compacted density of the negative electrode active material layer, which is conducive to improving or avoiding the problems of wrinkling of the negative electrode plate and battery deformation.

The compacted density of the negative electrode active material layer has a meaning well-known in the art, and may be measured by using instruments and methods known in the art. For example, a single-sided coated and cold-pressed negative electrode plate is taken, the thickness of the negative electrode active material layer is tested, and then, the surface density of the negative electrode active material layer is obtained with reference to a test method for testing the surface density of the positive electrode active material layer. Compacted density of negative electrode active material layer = surface density of negative electrode membrane/thickness of negative electrode membrane.

In some optional embodiments, when the positive electrode active material is a doped ternary positive electrode nickel-cobalt-manganese material and the negative electrode active material includes graphite, the electromotive force difference of the lithium secondary battery is greater than or equal to 4.2 V. The electromotive force difference of the lithium secondary battery is greater than or equal to 4.2 V, which is beneficial to the improvement of the energy density of the battery.

In some optional embodiments, the negative electrode active material layer further optionally includes a negative electrode conductive agent. The type of the negative electrode conductive agent is not particularly limited in the present application. As an example, the negative electrode conductive agent may include one or more of superconducting carbon, conductive graphite, acetylene black, carbon black, Ketjen black, carbon dots, carbon nanotubes, graphene and carbon nanofiber.

In some optional embodiments, the negative electrode active material layer further optionally includes a negative electrode binder. The type of the negative electrode binder is not particularly limited in the present application. As an example, the negative electrode binder may include one or more of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS).

In some optional embodiments, the negative electrode active material layer further optionally includes other auxiliaries. As an example, the other auxiliaries may include thickeners, such as carboxymethyl cellulose sodium (CMC-Na) and a PTC thermistor material.

In some optional embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include one or more of copper, copper alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The negative electrode active material layer is usually formed by coating a negative electrode slurry on the negative electrode current collector, followed by drying and cold pressing. The negative electrode slurry is usually formed by dispersing a negative electrode active material, an optional conductive agent, an optional binder and other optional auxiliaries in a solvent and uniformly stirring the mixture. The solvent may be N-methyl pyrrolidone (NMP) or deionized water, but is not limited thereto.

The negative electrode plate does not exclude other additional functional layers other than the negative electrode active material layer. For example, in some optional embodiments, the negative electrode plate in the present application may further include a conductive primer coating (e.g., composed of a conductive agent and a binder) sandwiched between the negative electrode current collector and the negative electrode active material layer and arranged on the surface of the negative electrode current collector. In some optional embodiments, the negative electrode plate in the present application may further include a protective layer covering the surface of the negative electrode active material layer.

When the battery cell is a lithium metal battery cell, the negative electrode plate may not include a negative electrode active material capable of deintercalating and intercalating active ions. For example, in some optional embodiments, the negative electrode plate may include a lithium plate or a lithium alloy plate. In some other embodiments, the negative electrode plate includes a mesh-shaped or foam-shaped three-dimensional skeleton layer, such as foam copper (or copper alloy), foam nickel (or nickel alloy), a copper (or copper alloy) mesh, a nickel (or nickel alloy) mesh, etc.

### [Separator]

A lithium secondary battery using an electrolyte solution and some lithium secondary batteries using a solid electrolyte further include a separator. The separator is arranged between the positive electrode plate and the negative electrode plate and serves the function of isolation. The type of the separator is not particularly limited in the present application, and any well-known separator with a porous structure having good chemical stability and mechanical stability may be selected. In some optional embodiments, the separator may be selected from one or more of a glass fiber membrane, a non-woven cloth membrane, a polyethylene (PE) membrane, a polypropylene (PP) membrane, a polyvinylidene fluoride membrane, and a multi-layer composite membrane thereof.

The type of the lithium secondary battery is not particularly limited in the present application. For example, the lithium secondary battery may be a lithium-ion battery.

In some optional embodiments, the lithium secondary battery may include an outer package. The outer package may be configured to encapsulate the above electrode assembly and electrolyte.

In some optional embodiments, the outer package of the lithium secondary battery may be a hard shell, such as a hard plastic shell, an aluminum shell, or a steel shell. The outer package of the lithium secondary battery may also be a soft package, such as a bag-type soft package. The material of the soft package may be plastic, such as one or more of polypropylene (PP), polybutylene terephthalate (PBT), and polybutylene succinate (PBS).

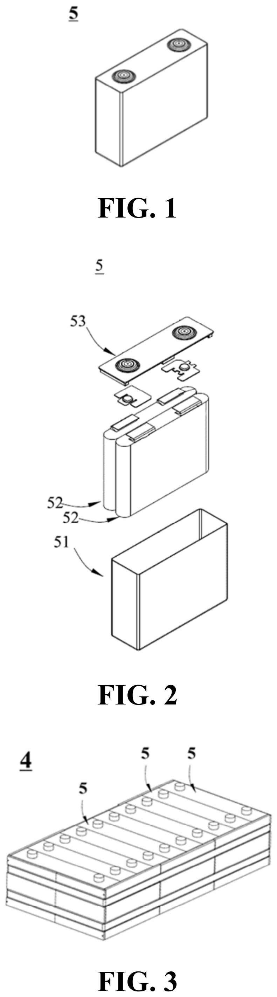

The shape of the lithium secondary battery is not particularly limited in the present application. The lithium secondary battery may be in a cylinder shape, a flat shape, a cuboid shape, or any other shapes. FIG. 1 shows a lithium secondary battery 5 with a square structure as an example.

In some optional embodiments, the lithium secondary battery may include an outer package. The outer package is configured to encapsulate a positive electrode plate, a negative electrode plate and an electrolyte.

In some optional embodiments, referring to FIG. 2, the outer package may include a case 51 and a cover plate 53. The case 51 may include a bottom plate and a side plate connected to the bottom plate, and the bottom plate and the side plate are enclosed to form an accommodating cavity. The case 51 has an opening that communicates with the accommodating cavity, and the cover plate 53 may cover the opening to close the accommodating cavity.

The positive electrode plate, the negative electrode plate and the separator may be formed into an electrode assembly 52 by a stacking process or a winding process. The electrode assembly 52 is encapsulated in the accommodating cavity. The electrolyte may be an electrolyte solution, and the electrode assembly 52 is impregnated with the electrolyte solution. One or more electrode assemblies 52 may be included in the lithium secondary battery 5, which may be adjusted according to demands.

In some optional embodiments, the outer package of the lithium secondary battery may be a hard shell, such as a hard plastic shell, an aluminum shell, or a steel shell. The outer package of the lithium secondary battery may also be a soft package, such as a bag-type soft package. The material of the soft package may be plastic, such as one or more of polypropylene (PP), polybutylene terephthalate (PBT), and polybutylene succinate (PBS).

In some optional embodiments, lithium secondary batteries may be assembled into a battery module, a plurality of lithium secondary batteries may be contained in the battery module, and the specific number of lithium secondary batteries may be adjusted according to the application and capacity of the battery module.

FIG. 3 is a battery module 4 as an example. Referring to FIG. 3, in the battery module 4, a plurality of lithium secondary batteries 5 may be sequentially arranged along the length direction of the battery module 4. Of course, they may be arranged in any other way. The plurality of lithium secondary batteries 5 may further be fixed by fasteners.

Optionally, the battery module 4 may further include a shell having an accommodating space, and the plurality of lithium secondary batteries 5 are accommodated in the accommodating space.

In some optional embodiments, the above battery modules may further be assembled into a battery pack, and the number of the battery modules contained in the battery pack may be adjusted according to the application and capacity of the battery pack.

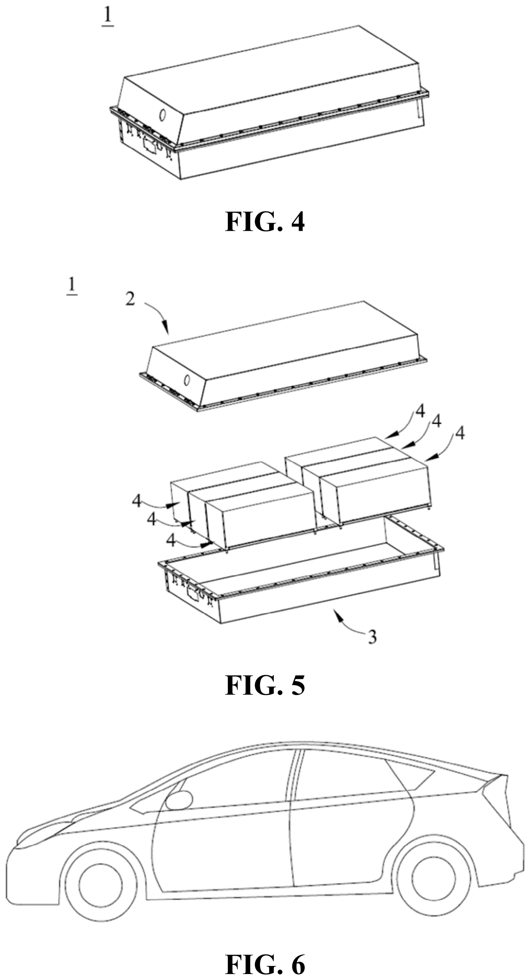

FIG. 4 is a battery pack 1 as an example. Referring to FIG. 4 and FIG. 5, the battery pack 1 may include a battery box and a plurality of battery modules 4 arranged in the battery box. The battery box includes an upper box 2 and a lower box 3, and the upper box 2 may cover the lower box 3 to form a closed space for accommodating the battery modules 4. The plurality of battery modules 4 may be arranged in the battery box in any manner.

### [Preparation method]

A preparation method of a lithium secondary battery may include the step of assembling a negative electrode plate, a positive electrode plate and an electrolyte to form the lithium secondary battery. In some optional embodiments, a positive electrode plate, a separator and a negative electrode plate may be wound or stacked in sequence, and the separator is located between the positive electrode plate and the negative electrode plate for isolation to obtain an electrode assembly (that is, a battery cell); and the electrode assembly is placed in an outer package, injected with an electrolyte solution and sealed to obtain the lithium secondary battery. In some optional embodiments, the lithium secondary battery is obtained after processes such as vacuum encapsulation, standing, formation and shaping.

In some optional embodiments, the preparation of the lithium secondary battery may further include the step of preparing the positive electrode plate. As an example, a positive electrode active material, a conductive agent and a binder may be dispersed in a solvent (such as N-methyl pyrrolidone (NMP)) to form a uniform positive electrode slurry; and the positive electrode slurry is coated on a positive electrode current collector, followed by oven drying, cold pressing and other processes, to obtain the positive electrode plate.

In some optional embodiments, the preparation of the lithium secondary battery may further include the step of preparing the negative electrode plate. As an example, a negative electrode active material, a binder, an optional thickener and an optional conductive agent may be dispersed in a solvent (such as deionized water) to form a uniform negative electrode slurry; and the negative electrode slurry is coated on a negative electrode current collector, followed by oven drying, cold pressing and other processes, to obtain the negative electrode plate.

In some embodiments of the present application, the lithium secondary batteries according to the present application may be assembled into a battery module, a plurality of lithium secondary batteries may be contained in the battery module, and the specific number of lithium secondary batteries may be adjusted according to the application and capacity of the battery module.

Optionally, the battery module may further include a shell having an accommodating space, and the plurality of lithium secondary batteries are accommodated in the accommodating space.

In some optional embodiments, the above battery modules may further be assembled into a battery pack, and the number of the battery modules contained in the battery pack may be adjusted according to the application and capacity of the battery pack.

### Electrical apparatus

According to a second aspect, an embodiment of the present application provides an electrical apparatus, including the lithium secondary battery according to the first aspect.

The electrical apparatus in the present application includes the lithium secondary battery according to the first aspect of the present application, and thus has at least the same advantages as the lithium secondary battery.

The lithium secondary battery may be used as a power source of the electrical apparatus, and may also be used as an energy storage unit of the electrical apparatus. The electrical apparatus may be, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

FIG. 6 is a schematic diagram of an electrical apparatus as an example. The electrical apparatus is an all-electric vehicle, a hybrid electric vehicle, a plug-in hybrid electric vehicle, or the like. In order to meet the requirement of the electrical apparatus for high energy density, a battery pack or a battery module may be used.

As another example, the electrical apparatus may be a mobile phone, a tablet, a laptop, etc. The electrical apparatus usually needs to be light and thin, and a lithium secondary battery may be used as a power source.

### Embodiments

The content disclosed in the present application is described in detail in the following embodiments. These embodiments are only for illustrative purposes because various modifications and changes made without departing from the scope of the content disclosed in the present application are apparent to those skilled in the art. Unless otherwise specified, all parts, percentages, and ratios reported in the following embodiments are based on weight, all reagents used in the embodiments are commercially available or synthesized according to conventional methods and may be directly used without further processing, and all instruments used in the embodiments are commercially available.

### Embodiment 1

### (1) Preparation of positive electrode plate:

Preparation of positive electrode active material: The precursor powder of a nickel-cobalt-manganese ternary positive electrode active material is mixed with a salt solution containing doping elements and subjected to a liquid phase diffusion reaction, and then dried to obtain doped precursor powder. The salt solution containing doping elements is a soluble metal solution containing doping elements, the solute is one of zinc sulfate, magnesium sulfate, aluminum chloride or zirconium nitrate, and the solvent is ethanol. The above solute and solvent are mixed to prepare a salt solution containing doping elements, then the ternary precursor powder is mixed with the salt solution containing doping elements, and a liquid phase diffusion reaction is carried out. The solid content percentage is 30wt% to 50wt%. The doping elements are uniformly infiltrated into the voids of the nickel-cobalt-manganese ternary positive electrode active material through the solution in a liquid phase diffusion manner.

Specific liquid phase diffusion reaction process conditions are as follows: the reaction temperature is 25-40°C, the reaction time is 30-90 min, the stirring rate is 15-45 Hz, and then, a positive electrode active material is prepared. The positive electrode active material is LiₐNi_{b}Co_{c}Mn_{f}M_{d}Oₑ. In Embodiment 1, a is 1, and e is 2; the ratio of b:c:f is 8:1:1; and M is Al. The prepared positive electrode active material, a conductive agent Super P and a binder polyvinylidene fluoride (PVDF) are prepared into a positive electrode slurry in N-methyl pyrrolidone (NMP).

The solid content of the positive electrode slurry is 50wt%, and the mass ratio of LiNi_{0.5}Co_{0.2}Mn_{0.3}O₂ to Super P to PVDF in solid components is 8:1:1. The positive electrode slurry is coated on a current collector aluminum foil, dried at 85°C, then cold-pressed, subjected to edge cutting, slicing and striping, and then dried at 85°C under vacuum conditions for 4 h to prepare a positive electrode plate. (2) Preparation of electrolyte solution:

In a glove box filled with argon (water content <10 ppm, and oxygen content <1 ppm), ethylene carbonate and ethyl methyl carbonate are added to a beaker in a mass ratio of 1:1 and stirred and mixed, and then, an appropriate amount of LiPF6 and LiFSI are slowly added to a nonaqueous organic solvent. After the lithium salt is completely dissolved, an appropriate amount of first additive tetrafluorovinylsilane and second additive are added to the above electrolyte solution and mixed uniformly to obtain a target electrolyte solution. The proportion of the additives in Table 1 is the mass percentage calculated based on the total mass of the electrolyte solution.

### (3) Preparation of negative electrode plate

Graphite used as a negative electrode active material, a certain amount of silicon and conductive agent Super P, a thickener CMC and a binder styrene butadiene rubber (SBR) are uniformly mixed in deionized water to prepare a negative electrode slurry. The solid content of the negative electrode slurry is 30wt%, and the mass ratio of graphite to Super P to CMC to the binder styrene butadiene rubber (SBR) in solid components is 80:15:3:2. The negative electrode slurry is coated on a current collector copper foil, dried at 85°C, then subjected to cold pressing, edge cutting, slicing and striping, and then dried at 120°C under vacuum conditions for 12 h to prepare a positive electrode plate.

### (4) Separator

A 16 µm polyethylene (PE) membrane is used as a separator.

### (5) Preparation of lithium-ion battery:

The prepared positive electrode plate, separator and negative electrode plate are stacked in sequence, the separator is located between the positive electrode plate and the negative electrode plate to play a role in isolating the positive electrode from the negative electrode, a bare battery cell is obtained by winding, tabs are welded, the bare battery cell is placed in an outer package, the above prepared electrolyte solution is injected into a dried battery cell, and the preparation of a lithium-ion battery is completed after the processes, such as encapsulation, standing, formation, shaping and capacity test (the thickness of a pouch lithium-ion battery is 4.0 mm, the width is 60 mm, and the length is 140 mm).

### Embodiments 2 to 21 and Comparative Examples 1 to 4

The preparation method is similar to that of Embodiment 1, except that different positive electrode active materials are used to regulate relevant parameters in the preparation steps of the positive electrode plate, see Table 1 for details.

### Test part

In the following tests, when the positive electrode active material is lithium-nickel-cobalt-manganese oxide, the discharge cut-off voltage is 2.8 V, and the charge cut-off voltage is 4.25 V or 4.3 V; and when the positive electrode active material is lithium iron phosphate, the discharge cut-off voltage is 2.5 V, and the charge cut-off voltage is 3.65 V.

A method for determining the mass percentage content of doping elements in the positive electrode active material is: inductively coupled plasma (ICP) test

### (1) Test of cycling performance of lithium-ion battery

The ambient temperature is adjusted to 25°C, and the first charge and discharge are performed. The battery cell is charged to 4.25 V at a charging current of 1 C, charged to 0.05 C at a constant voltage, allowed to stand for 10 min, and discharged at a constant current of 1 C until the discharge cut-off voltage is 2.8 V. This is a charge and discharge cycle, and the discharge capacity is recorded as C0. 300 cycles are performed according to the above charge and discharge process. The discharge capacity of the 300th cls is C1. Cycling capacity retention rate of battery cell = C1/C0*100%.

### (2) Test of storage life of lithium-ion battery

At 25°C, the battery is charged to 4.25 V at a constant current of 1 C, then charged to 0.05 C at a constant voltage, allowed to stand for 10 min, and discharged to 2.8 V at 1 C, and the discharge capacity DO is recorded. Subsequently, the battery is placed in a thermostat at 60°C for 60 d, and then, the battery cell is taken out. After the surface temperature of the battery cell returns to a room temperature, the battery is discharged to 2.8 V at 1 C, then charged to 4.25 V at 1 C, charged to 0.05 C at a constant voltage, allowed to stand for 10 min, and discharged to 2.8 V at 1 C, and the discharge capacity D1 is recorded. High temperature storage capacity retention rate of battery = Dl/D0*100%.

### (3) Performance test of direct-current internal resistance DCR of lithium-ion battery

The battery is charged to 4.25 V at 1 C, then charged to 0.05 C at a constant voltage, allowed to stand for 30 min, discharged at 1 C for 0.5 h, and allowed to stand for 30 min, and the voltage V1 after standing is recorded. Then, the battery is discharged at 4 C for 30 s with a sampling interval of 0.1 S, and the voltage V2 at the end of discharge is recorded. DCR of battery = (V1-V2)/I, I=4C.

**Table 1**

| Number | Ratio of W1 to W2 to W3 | Type of doping element M | | Positive electrode active material | First additive | | Second additive | | Cycling capacity retention rate | High temperature storage capacity retention rate | Direct-current internal DCR/mohm |
|---|---|---|---|---|---|---|---|---|---|---|---|
| | | Type | W3 content | Ratio of b:c:f | Type: C2-C8 alkenyl silane | W1 content | Type | W2 content | | | |
| Embodiment 1 | 1:0.2:0.1 | Al | 0.005% | 8:1:1 | Tetravinylsilane | 0.05% | Lithium fluorosulfonate | 0.01% | 93.20% | 92.40% | 32 |
| Embodiment 2 | 1:0.5:0.5 | Al | 0.050% | 8:1:1 | Tetravinylsilane | 0.10% | Lithium fluorosulfonate | 0.05% | 94.50% | 93.00% | 28 |
| Embodiment 3 | 1:0.3:0.2 | Al | 0.060% | 8:1:1 | Tetravinylsilane | 0.30% | Lithium fluorosulfonate | 0.09% | 96.40% | 95.30% | 24 |
| Embodiment 4 | 1:0.6:0.2 | Al | 0.100% | 8:1:1 | Tetravinylsilane | 0.50% | Lithium fluorosulfonate | 0.30% | 97.10% | 95.60% | 21 |
| Embodiment 5 | 1:1:0.3 | Al | 0.210% | 8:1:1 | Tetravinylsilane | 0.70% | Lithium fluorosulfonate | 0.70% | 97.00% | 95.20% | 22 |
| Embodiment 6 | 1:2:0.5 | Al | 0.500% | 8:1:1 | Tetravinylsilane | 1% | Lithium bis(fluorosulfonyl)imide | 2% | 92.50% | 90.30% | 40 |
| Embodiment 7 | 1:0.3:0.2 | Zr | 0.020% | 8:1:1 | Tetravinylsilane | 0.10% | Lithium tetrafluoroborate | 0.03% | 96.20% | 95.10% | 25 |
| Embodiment 8 | 1:1:0.3 | Mg | 0.30% | 8.2:0.8:1 | Trivinylethylsilane | 1% | Lithium tetrafluoroborate | 1% | 97.40% | 95.30% | 21 |
| Embodiment 9 | 1:1.5:0.3 | B | 0.15% | 8.5:0.5:1 | Diethyldivinylsilane | 0.5% | Lithium fluorosulfonate | 0.75% | 97.30% | 95.10% | 23 |
| Embodiment 10 | 1:0.7:0.2 | Zn | 0.10% | 8.7:0.3:1 | Trivinylalkynylsilane | 0.5% | Lithium fluorosulfonate | 0.35% | 97.30% | 95.80% | 20 |
| Embodiment 11 | 1:0.4:0.3 | v | 0.09% | 9.0:0.5:0.5 | Tetravinylsilane | 0.300% | Lithium bis(fluorosulfonyl)imide | 0.12% | 97.30% | 95.80% | 26 |
| Embodiment 12 | 1:0.5:0.3 | Ti | 0.09% | 9.1:0.05:0.04 | Tetravinylsilane | 0.300% | Lithium bis(fluorosulfonyl)imide | 0.15% | 97.20% | 95.90% | 24 |
| Embodiment 13 | 1:0.7:0.2 | Cu | 0.06% | 9.5:0.02:0.03 | Tetravinylsilane | 0.300% | Lithium bis(fluorosulfonyl)imide | 0.21% | 97.20% | 95.60% | 21 |
| Embodiment 14 | 1:1:0.3 | Cr | 0.09% | 9.6:0.01:0.03 | Tetravinylsilane | 0.300% | Lithium bis(fluorosulfonyl)imide | 0.30% | 97.10% | 95.30% | 22 |
| Comparative Example 1 | 1:0.16:0.16 | Zn | 0.01% | 8:1:1 | Tetravinylsilane | 0.03% | Lithium fluorosulfonate | 0.01% | 85.30% | 84.30% | 60 |
| Comparative Example 2 | 1:0.5:0.6 | Ti | 0.30% | 8:1:1 | Tetravinylsilane | 0.50% | Lithium fluorosulfonate | 0.25% | 84.50% | 80.30% | 67 |
| Comparative Example 3 | 1:2.1:0.6 | Mg | 0.30% | 8:1:1 | Tetravinylsilane | 0.50% | Lithium fluorosulfonate | 1.10% | 80.20% | 75.10% | 80 |
| Comparative Example 4 | 1:0.7:0.6 | Zn | 0.30% | 8.7:0.3:1 | Triethylvinylsilane | 0.50% | Lithium fluorosulfonate | 0.35% | 85.80% | 89.30% | 59 |
| Comparative Example 5 | 1:0.4:1 | v | 0.30% | 9.0:0.5:0.5 | Triethylvinylsilane | 0.30% | Lithium bis(fluorosulfonyl)imide | 0.12% | 85.20% | 84.70% | 64 |
| Comparative Example 6 | 1:2.2:0.5 | Cr | 0.25% | 9.6:0.01:0.03 | Tetravinylsilane | 0.50% | Lithium bis(fluorosulfonyl)imide | 1.1% | 86.30% | 83.20% | 46 |

From the comparison results of Embodiments 1 to 7 and Comparative Examples 1 to 3, it can be seen that when the content of the second additives in Comparative Examples 1 to 3 is not within an appropriate range, the cycling performance, high temperature storage performance and resistance performance of the lithium secondary batteries in Comparative Examples 1 to 3 are poorer than those of the embodiments, indicating that when the mass ratio of the content of the second additive to the content of the first additive and doping elements is within an appropriate range, the cycling performance, high temperature storage performance and resistance performance of the lithium secondary batteries may be improved.

From the comparison results of Embodiments 8 to 14 and Comparative Examples 4 to 6, it can be seen that when the content of the doping elements in Comparative Examples 4 to 6 is too high, the cycling performance, high temperature storage performance and resistance performance of the lithium secondary batteries in Comparative Examples 4 to 6 are poorer than those of the embodiments, indicating that when the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5), the cycling performance, high temperature storage performance and resistance performance of the lithium secondary battery may be improved.

The above descriptions are merely specific embodiments of the present application, but are not intended to limit the scope of protection of the present application. Any person skilled in the art may easily conceive of various equivalent modifications or substitutions without departing from the technical scope disclosed in the present application. All these modifications or substitutions should be encompassed within the scope of protection of the present application. Therefore, the scope of protection of the present application shall be determined with reference to the scope of protection of the claims.

## Claims

1. A lithium secondary battery, comprising a positive electrode plate and an electrolyte solution,
wherein the positive electrode plate comprises a positive electrode active material layer containing a positive electrode active material, and the positive electrode active material comprises at least one doping element selected from aluminum, zirconium, boron, magnesium, zinc, calcium and titanium;
the electrolyte solution comprises a silane-based first additive containing C2-C8 alkenyl and a second additive, and the second additive is selected from at least one of lithium fluorosulfonate, lithium bis(fluorosulfonyl)imide and lithium tetrafluoroborate; and
the ratio of the mass percentage content W1 of the first additive in the electrolyte solution to the mass percentage content W2 of the second additive in the electrolyte solution to the mass percentage content W3 of the doping element in the positive electrode active material satisfies 1:(0.2-2):(0.1-0.5).

2. The lithium secondary battery according to claim 1, wherein the ratio of W1 to W2 to W3 satisfies 1:(0.5-1.5):(0.2-0.4).

3. The lithium secondary battery according to claim 1 or 2, wherein the mass percentage content W1 of the first additive in the electrolyte solution is 0.05% to 1%; and/or
the first additive comprises at least one of tetravinylsilane, ethyltrivinylsilane, diethyldivinylsilane, triethylvinylsilane, and trivinylalkynylsilane.

4. The lithium secondary battery according to any one of claims 1 to 3, wherein the mass percentage content W2 of the second additive in the electrolyte solution is 0.01% to 2%.

5. The lithium secondary battery according to any one of claims 1 to 4, wherein the electrolyte solution comprises an organic solvent, and the organic solvent comprises one or more of ethylene carbonate, propylene carbonate, fluorbenzene, dimethyl carbonate, diethyl carbonate, ethyl methyl carbonate, ethyl acetate, propyl acetate and methyl formate.

6. The lithium secondary battery according to any one of claims 1 to 5, wherein the mass percentage content W3 of the doping element in the positive electrode active material is 0.005% to 0.5%.

7. The lithium secondary battery according to any one of claims 1 to 6, wherein the positive electrode active material comprises one or more of lithium transition metal oxides with a structural formula of LiₐNi_{b}Co_{c}Mn_{f}M_{d}Oₑ, or modified compounds thereof, wherein 0.8≤a≤1.2, 0.5≤b<1, 0<c<1, 0<d<1, 1≤e≤2, 0≤f≤1, and M comprises one or more selected from Mn, Al, Zr, Zn, Cu, Cr, Mg, Fe, V, Ti and B.

8. The lithium secondary battery according to claim 7, wherein the ratio of b to (b+c+f) is (0.8-0.98):1; and/or
the ratio of c to (b+c+f) is (0.01-0.2):1; and/or
the ratio of f to (b+c+f) is (0.1-0.2):1,
wherein (b+c+f) represents the sum of b, c and f.

9. The lithium secondary battery according to any one of claims 1 to 8, wherein the surface density of the positive electrode active material layer is greater than or equal to 3.0 g/cm³.

10. The lithium secondary battery according to any one of claims 1 to 9, wherein the lithium secondary battery further comprises a negative electrode plate, and the negative electrode plate comprises a negative electrode active material layer; and the negative electrode active material layer comprises graphite.

11. The lithium secondary battery according to claim 10, wherein the negative electrode active material layer further comprises silicon element.

12. The lithium secondary battery according to claim 10 or 11, wherein the negative electrode active material layer contains silicon element with a mass content of less than or equal to 8% based on the total mass of the negative electrode active material layer.

13. The lithium secondary battery according to any one of claims 10 to 12, wherein the compacted density of the negative electrode active material layer is 1.3-1.7 g/cm³.

14. An electrical apparatus, comprising the lithium secondary battery according to any one of claims 1 to 13.
